# EUROPEAN PATENT APPLICATION

(11) **EP 4 671 516 A1**
(43) Date of publication of application: **31.12.2025**
(21) Application number: 24760330.1
(22) Date of filing: 20.02.2024
(51) Int. Cl.: F02C 3/22, C01B 3/26, C10L 3/00, F02C 6/00

(54) **ELECTRICAL POWER GENERATION SYSTEM**

(30) Priority: 21.02.2023 JP 2023025216
(71) Applicant: Mitsubishi Heavy Industries, Ltd., Tokyo 100-8332 (JP)
(72) Inventor: TORII, Shunsuke, Tokyo 100-8332 (JP); YOSHIMOTO, Toshizumi, Tokyo 100-8332 (JP); TAMURA, Ken, Tokyo 100-8332 (JP)
(74) Representative: Hoffmann Eitle
(86) International application number: PCT/JP2024/005900
(87) International publication number: WO 2024/177032

(57) **Abstract**

This electrical power generation system comprises a heater (12), a reactor (10), an exhaust gas heat exchanger (14), and a gas turbine (22). The heater is configured to supply heat to the reactor. The reactor is configured to generate hydrogen by pyrolysis of hydrocarbon gas into hydrogen and carbon. Fuel for the gas turbine includes hydrogen produced by the reactor. The exhaust gas heat exchanger is configured to provide heat of exhaust gas, which is discharged from the heater, to fuel gas in the electrical power generation system.

## Description

### TECHNICAL FIELD

The present disclosure relates to an electrical power generation system.

### BACKGROUND ART

Patent Literature 1 describes an apparatus that thermally decomposes a hydrocarbon gas, such as methane, with a catalyst to extract hydrogen.

### CITATION LIST

### Patent Literature

Patent Document 1: JP2022-24997A

### SUMMARY OF INVENTION

### Technical Problem

The hydrocarbon gas has to be heated to cause thermal decomposition. Since fuel is used to generate the heat source for thermal decomposition, the use of the hydrogen produced through thermal decomposition to generate electric power generation may decrease the power generation efficiency.

### Solution to Problem

One aspect of the present disclosure provides an electrical power generation system. The electrical power generation system includes a heater, a reactor, an exhaust gas heat exchanger, and a gas turbine. The heater is configured to supply heat to the reactor. The reactor is configured to produce hydrogen by thermally decomposing a hydrocarbon gas into hydrogen and carbon. The gas turbine is fueled by the hydrogen produced by the reactor. The exhaust gas heat exchanger is configured to transfer heat of exhaust gas discharged from the heater to fuel gas in the electrical power generation system.

### BRIEF DESCRIPTION OF DRAWINGS

Fig. 1 is a block diagram illustrating a first embodiment of an electrical power generation system.
Fig. 2 is a block diagram illustrating a second embodiment of an electrical power generation system.
Fig. 3 is a block diagram illustrating a third embodiment of an electrical power generation system.
Fig. 4 is a block diagram illustrating a fourth embodiment of an electrical power generation system.
Fig. 5 is a block diagram illustrating a fifth embodiment of an electrical power generation system.

### DESCRIPTION OF EMBODIMENTS

### First Embodiment

A first embodiment will now be described with reference to the drawings.

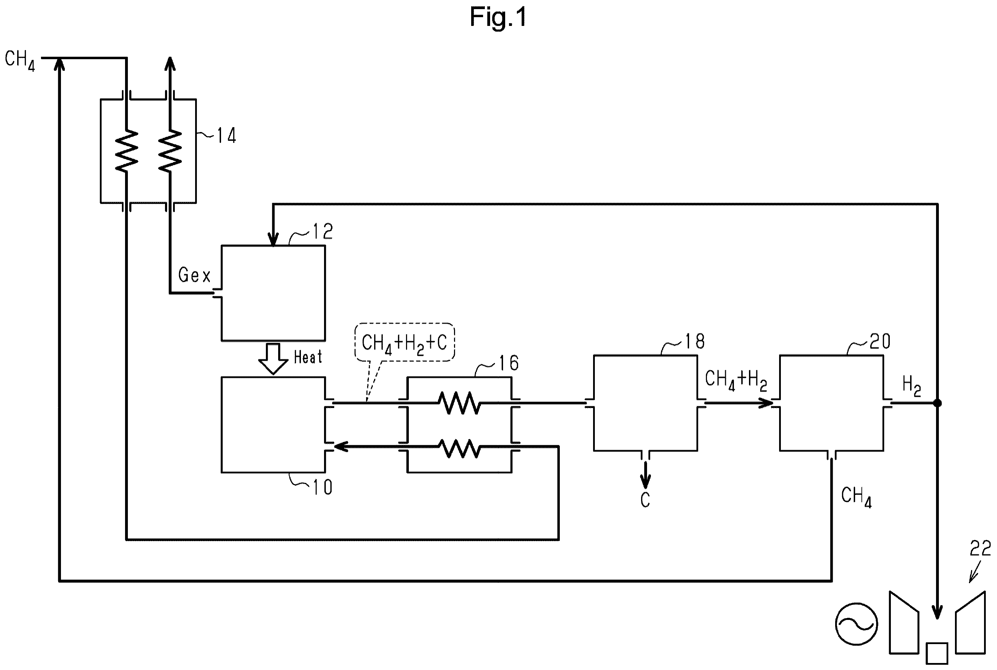

Fig. 1 shows a power generation system in accordance with the present embodiment.

Fig. 1 illustrates a reactor 10 that thermally decomposes methane into hydrogen and carbon with a catalyst. An example of a catalyst is iron. A heater 12 supplies heat to the reactor 10. More specifically, the heater 12 supplies heat to methane, which reacts in the reactor 10, and to the catalyst. Heat is supplied to set the temperature of the methane, which reacts in the reactor 10, and the catalyst to, for example, 600°C to 900°C. The heater 12 supplies the reactor 10 with the heat obtained by burning hydrogen.

An exhaust gas heat exchanger 14 heats methane, which is the subject of thermal decomposition, with the heat of the exhaust gas Gex from the heater 12.

The methane heated by the exhaust gas Gex in the exhaust gas heat exchanger 14 is supplied to a produced gas heat exchanger 16. The produced gas heat exchanger 16 heats the methane supplied to the reactor 10 using the heat of a mixture of hydrogen, methane, and carbon flowing out of the reactor 10.

A solid-phase separator 18 removes carbon from the mixture flowing out of the produced gas heat exchanger 16 to generate a gas mixture of methane and hydrogen. Examples of the solid-phase separator 18 include a cyclone and a filter.

The gas mixture flowing out of the solid-phase separator 18 is supplied to a hydrogen purifier 20. The hydrogen purifier 20 extracts hydrogen from the gas mixture. In one example, the hydrogen purifier 20 uses Pressure Swing Adsorption (PSA).

The hydrogen separated by the hydrogen purifier 20 is supplied to the heater 12 and a gas turbine 22. The methane extracted by the hydrogen purifier 20 is supplied to the exhaust gas heat exchanger 14. Thus, the methane extracted by the hydrogen purifier 20 is supplied to the reactor 10.

### Operation and Advantages of Present Embodiment

In the reactor 10, methane is thermally decomposed into carbon and hydrogen. Since a thermal decomposition reaction, which occurs at a high temperature, is an endothermic reaction, the reactor 10 is constantly supplied with heat from the heater 12. The heater 12 burns hydrogen to generate the heat supplied to the reactor 10. The exhaust gas heat exchanger 14 supplies the heat of the exhaust gas Gex discharged from the heater 12 to methane, which serves as the feedstock of the fuel gas supplied to the gas turbine 22.

As a result, less hydrogen is consumed by the heater 12 than a case where the exhaust gas heat exchanger 14 is not used. More specifically, the power generation efficiency, which is defined by the ratio of the amount of electric power generated by the gas turbine 22 to the amount of methane consumed, is higher in the electric power generation system of Fig. 1 than a case where the exhaust gas heat exchanger 14 is not used.

### Second Embodiment

A second embodiment will now be described with reference to the drawings focusing on differences from the first embodiment.

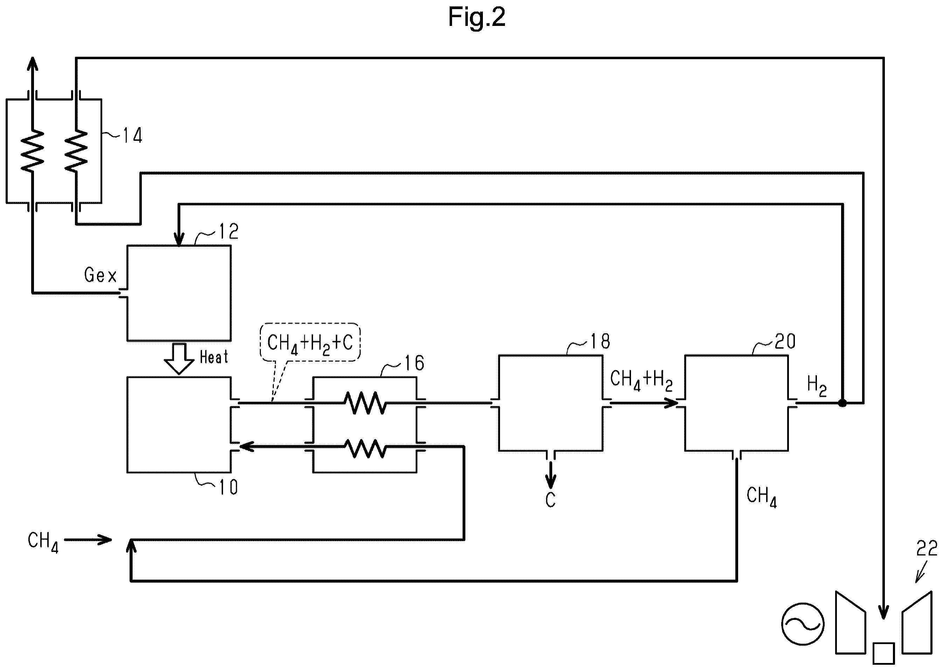

Fig. 2 shows an electric power generation system in accordance with the present embodiment. In Fig. 2, same reference numerals are given to those members that are the same as the corresponding members shown in Fig. 1.

As shown in Fig. 2, the exhaust gas heat exchanger 14 of the present embodiment is supplied with the hydrogen extracted by the hydrogen purifier 20. The hydrogen supplied to the exhaust gas heat exchanger 14 is heated by the exhaust gas Gex and then supplied to the gas turbine 22.

### Operation and Advantages of Present Embodiment

It is desirable that the gas mixture supplied to the hydrogen purifier 20 be approximately the ambient temperature. When the fuel gas supplied to the gas turbine 22 has a relatively high temperature, the amount of fuel consumed by the gas turbine 22 can be reduced. This is desirable since the efficiency of an electric power generation plant can be improved. More specifically, the desirable temperature is, for example, approximately 100°C to 400°C. Thus, it is desirable that the hydrogen extracted by the hydrogen purifier 20 be heated before being supplied to the gas turbine 22.

In the present embodiment, the exhaust gas heat exchanger 14 is used to heat the hydrogen with the exhaust gas Gex. This increases the power generation efficiency.

### Third Embodiment

A third embodiment will now be described with reference to the drawings focusing on differences from the first embodiment.

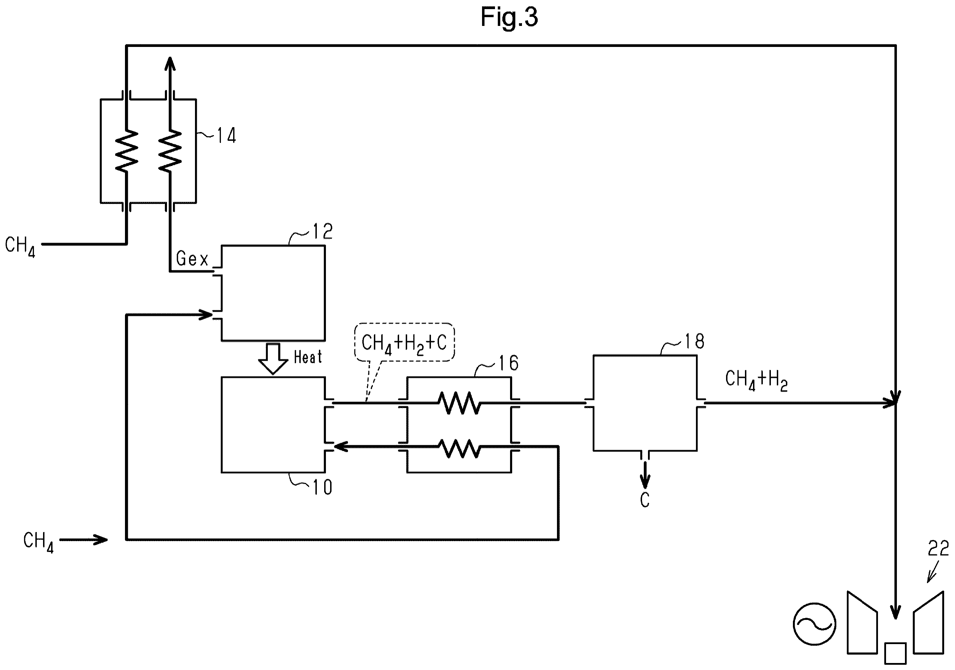

Fig. 3 shows an electrical power generation system in accordance with the present embodiment. In Fig. 3, same reference numerals are given to those members that are the same as the corresponding members shown in Fig. 1.

The electrical power generation system in accordance with the present embodiment shown in Fig. 3 does not include the hydrogen purifier 20. The gas mixture of methane and hydrogen from which carbon is removed by the solid-phase separator 18 is used directly to fuel the gas turbine 22. Further, the heater 12 is fueled by the methane supplied to the electric power generation system. Part of the methane fed to the electrical power generation system is heated by the exhaust gas heat exchanger 14 and then used to fuel the gas turbine 22.

### Operation and Advantages of Present Embodiment

The methane and the hydrogen from which carbon is removed by the solid-phase separator 18 is supplied at a high temperature to the gas turbine 22. Further, part of the methane fed to the electrical power generation is heated to a high temperature by the exhaust gas heat exchanger 14 and then supplied to the gas turbine 22. This allows the temperature of the fuel gas supplied to the gas turbine 22 to be suitable for the gas turbine 22. The methane fed to the electrical power generation system and used as fuel gas for the gas turbine 22 is heated by the exhaust gas Gex in the exhaust gas heat exchanger 14. This further reduces the methane consumed to heat the methane supplied to the gas turbine 22. Thus, the power generation efficiency of the electrical power generation system is further increased.

### Fourth Embodiment

A fourth embodiment will now be described with reference to the drawings focusing on differences from the third embodiment.

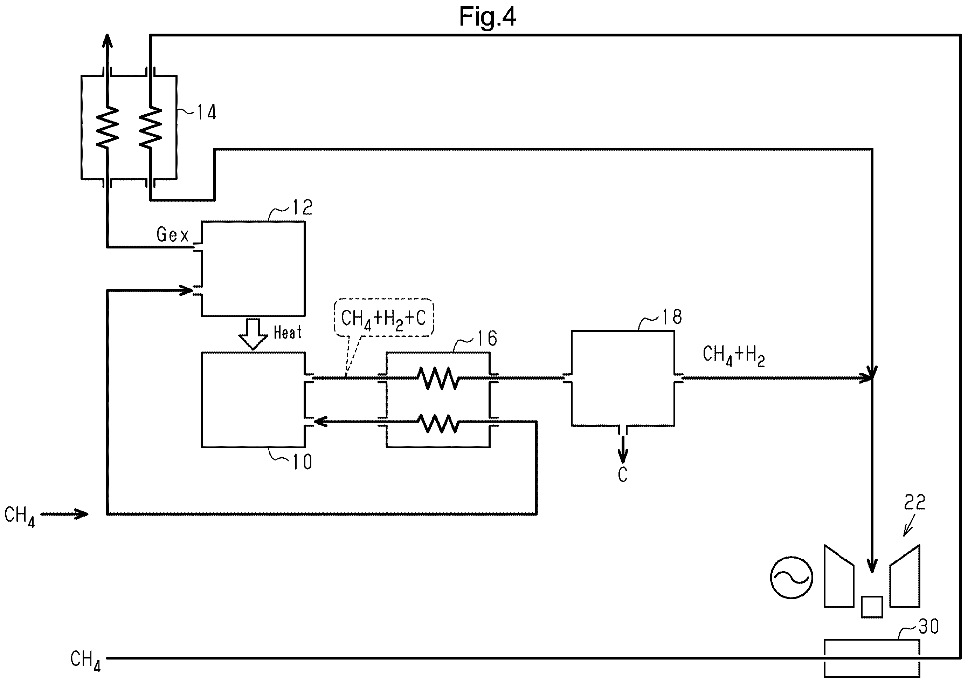

Fig. 4 shows a power generation system in accordance with the present embodiment. In Fig. 4, same reference numerals are given to those members that are the same as the corresponding members shown in Fig. 1.

As shown in Fig. 4, part of the methane supplied to the exhaust gas heat exchanger 14 of the present embodiment is fed to the electrical power generation system and first heated by the heat generated by the gas turbine 22 in a heat exchanger 30. The methane heated by the heat exchanger 30 is supplied to the exhaust gas heat exchanger 14. The temperature of the methane supplied to the exhaust gas heat exchanger 14 may be, for example, 150°C to 350°C.

In the present embodiment described above, the arrangement of the heat exchanger 30 allows the methane supplied to the gas turbine 22 to be sufficiently increased in temperature even when the amount of heat is small in the exhaust gas heat exchanger 14.

### Fifth Embodiment

A fifth embodiment will now be described with reference to the drawings focusing on differences from the first embodiment.

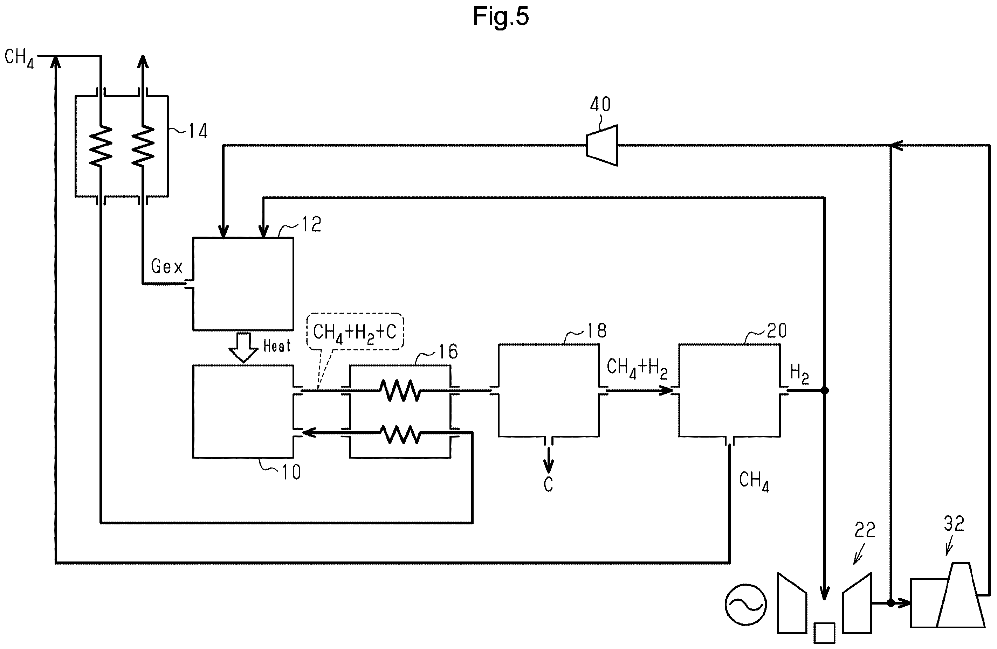

Fig. 5 shows a power generation system in accordance with the present embodiment. In Fig. 5, same reference numerals are given to those members that are the same as the corresponding members shown in Fig. 1.

In addition to the combustion heat of hydrogen, the heater 12 shown in Fig. 5 supplies the heat of the exhaust gas of the gas turbine 22 to the reactor 10. More specifically, the exhaust gas of the gas turbine 22 is compressed by a blower compressor 40 and then supplied to the heater 12. More specifically, in the present embodiment, the heat of the exhaust gas of the gas turbine 22 is also supplied to a heat recovery steam generator 32. The exhaust gas supplied to the heat recovery steam generator 32 is also compressed by the blower compressor 40 and then supplied to the heater 12.

As described above, in the present embodiment, the heat of the exhaust gas of the gas turbine is used for heating in the reactor 10. This reduces the amount of hydrogen consumed to perform heating in the reactor 10.

### Corresponding Relationship

The corresponding relationship of the elements in the above embodiments and the elements in the Clause section will now be described. The corresponding relationship will be described in association with the clause number. In clauses 1 and 10, hydrocarbon gas corresponds to methane. The fuel gas in the electrical power generation system corresponds to methane in Figs. 1, 3, and 5, hydrogen in Fig. 2, and the gas mixture of hydrogen and methane in Fig. 4. The exhaust gas heat generator corresponds to the exhaust gas heat exchanger 14. The elements recited in clauses 2 and 3 correspond to Figs. 1 and 5. The elements recited in clause 4 correspond to Fig. 2. The elements recited in clauses 5 and 6 correspond to Figs. 3 and 4. The elements recited in clause 7 correspond to Fig. 4. The fuel for the heater in clause 8 corresponds to methane in Figs. 3 and 4 and hydrogen in Figs. 1, 2, and 5. The elements recited in clause 9 correspond to Fig. 5.

### Other Embodiments

The embodiments may be modified as described below. The embodiments and the modified examples described below may be combined as long as there is no technical contradiction.

### Fuel for Heater

The fuel for the heater 12 shown in Figs. 1 to 5 does not necessarily have to be combined with the fuel gas for the gas turbine 22. For example, in Fig. 1, the fuel for the heater 12 may be methane.

The fuel for the heater 12 does not necessarily have to be methane or hydrogen. The heater 12 may be fueled by, for example, the gas mixture of hydrogen and methane output from the solid-phase separator 18. The fuel for the heater 12 is not limited to fuel including at least one of hydrogen and methane.

### Heater

For example, the methane supplied from the produced gas heat exchanger 16 to the reactor 10 does not have to be subject to heating by the heater 12. In such a case, heated methane heats the reactor 10. This corresponds to a situation in which the heater 12 supplies heat to the reactor 10.

Subject of Heating by the Exhaust Gas Heat Exchanger 14

The subject of heating by the exhaust gas heat exchanger 14 is not limited to the gases shown in Figs. 1 to 5. For example, the gases may be combined. Further, in the structure shown in Fig. 3, the subject may be the gas mixture of methane and hydrogen output from the solid-phase separator 18.

### Fuel for Gas Turbine

The methane supplied to the reactor 10 or the like may be extracted from natural gas or the like, and the fuel for the gas turbine 22 may include liquefied natural gas.

### Hydrocarbon Gas

The hydrocarbon gas does not necessarily have to be methane. For example, the hydrocarbon gas may be propane. In this case, the substances flowing out of a pyrolysis device include methane, ethylene, propane, and the like in addition to hydrogen and carbon.

### Others

The solid-phase separator 18 may be located between the reactor 10 and the produced gas heat exchanger 16.

A device may be provided to heat the hydrogen output from the hydrogen purifier 20 of Figs. 1, 2, and 5 before the hydrogen is supplied to the gas turbine 22.

A compressor may be provided to compress the hydrogen output from the hydrogen purifier 20 of Figs. 1, 2, and 5 before the hydrogen is supplied to the gas turbine 22.

A buffer for storing hydrogen may be arranged between the hydrogen purifier 20 and the gas turbine 22 in Figs. 1, 2, and 5.

A device may be provided to heat the gas mixture of hydrocarbon gas and hydrogen output from the solid-phase separator 18 of Figs. 3 and 4 before the gas mixture is supplied to the gas turbine 22.

A compressor may be provided to compress the gas mixture of methane and hydrogen output from the solid-phase separator 18 of Figs. 3 and 4 and the methane heated by the exhaust gas heat exchanger 14 before they are supplied to the gas turbine 22.

A buffer for storing the gas mixture of methane and hydrogen may be arranged between the solid-phase separator 18 and the gas turbine 22 in Figs. 3 and 4.

### Clauses

1. An electrical power generation system, including:
   a heater;
   a reactor;
   an exhaust gas heat exchanger; and
   a gas turbine, where
   the heater is configured to supply heat to the reactor,
   the reactor is configured to produce hydrogen by thermally decomposing a hydrocarbon gas into hydrogen and carbon,
   the gas turbine is fueled by the hydrogen produced by the reactor, and
   the exhaust gas heat exchanger is configured to transfer heat of exhaust gas discharged from the heater to fuel gas in the electrical power generation system.
   In the above structure, the heat of the exhaust gas discharged from the heater is transferred to the fuel gas in the electrical power generation system. This increases the energy utilization efficiency in the electrical power generation efficiency as compared to a case where the heat of the exhaust gas is not transferred to the fuel gas. Thus, the energy utilization efficiency of the electrical power generation system is increased.
2. The electrical power generation system according to clause 1, where the exhaust gas heat exchanger is configured to transfer the heat of the exhaust gas discharged from the heater to the hydrocarbon gas supplied to the reactor.
3. The electrical power generation system according to clause 2, further including a produced gas heat exchanger, where
   the produced gas heat exchanger is configured to transfer heat of a gas mixture of the hydrogen and the hydrocarbon gas produced by the reactor to the hydrocarbon gas supplied to the reactor, and
   the exhaust gas heat exchanger is configured to transfer the heat of the exhaust gas discharged from the heater to the hydrocarbon gas supplied to the produced gas heat generator.
4. The electrical power generation system according to any one of clauses 1 to 3, where the exhaust gas heat exchanger is configured to transfer the heat of the exhaust gas discharged from the heater to the hydrogen produced by the reactor in order to transfer heat to fuel gas supplied to the gas turbine.
5. The electrical power generation system according to any one of clauses 1 to 4, where
   fuel gas of the gas turbine is a gas mixture of hydrocarbon gas and hydrogen, and
   the exhaust gas heat exchanger is configured to transfer the heat of the exhaust gas discharged from the heater to the hydrocarbon gas included in the gas mixture in order to transfer heat to the fuel gas supplied to the gas turbine.
6. The electrical power generation system according to clause 5, where
   the fuel gas of the gas turbine includes a gas mixture of the hydrocarbon gas and the hydrogen that are produced by thermally decomposing the hydrocarbon gas with the reactor, and hydrocarbon gas that is supplied to the gas turbine by bypassing the reactor, and
   the exhaust gas heat exchanger is configured to transfer the heat of the exhaust gas discharged from the heater to the hydrocarbon gas supplied to the gas turbine by bypassing the reactor in order to transfer heat to the fuel gas supplied to the gas turbine.
7. The electrical power generation system according to clause 6, where the hydrocarbon gas supplied to the gas turbine by bypassing the reactor is heated by heat of the gas turbine before the hydrocarbon gas supplied to the gas turbine by bypassing the reactor is supplied to the exhaust gas heat exchanger.
8. The electrical power generation system according to any one of clauses 1 to 7, where the heater is configured to heat the reactor by burning fuel, and the fuel includes at least one of hydrocarbon gas and hydrogen.
9. The electrical power generation system according to clause 8, where the heater is configured to heat the reactor with the fuel and with exhaust heat of the gas turbine.
10. The electrical power generation system according to any one of clauses 1 to 9, where the hydrocarbon gas is methane.

## Claims

1. An electrical power generation system, comprising:
a heater;
a reactor;
an exhaust gas heat exchanger; and
a gas turbine, wherein
the heater is configured to supply heat to the reactor,
the reactor is configured to produce hydrogen by thermally decomposing a hydrocarbon gas into hydrogen and carbon,
the gas turbine is fueled by the hydrogen produced by the reactor, and
the exhaust gas heat exchanger is configured to transfer heat of exhaust gas discharged from the heater to a fuel gas in the electrical power generation system.

2. The electrical power generation system according to claim 1, wherein the exhaust gas heat exchanger is configured to transfer the heat of the exhaust gas discharged from the heater to the hydrocarbon gas supplied to the reactor.

3. The electrical power generation system according to claim 2, further comprising a produced gas heat exchanger, wherein:
the produced gas heat exchanger is configured to transfer heat of a gas mixture of the hydrogen and the hydrocarbon gas produced by the reactor to the hydrocarbon gas supplied to the reactor; and
the exhaust gas heat exchanger is configured to transfer the heat of the exhaust gas discharged from the heater to the hydrocarbon gas supplied to the produced gas heat generator.

4. The electrical power generation system according to claim 1, wherein the exhaust gas heat exchanger is configured to transfer the heat of the exhaust gas discharged from the heater to the hydrogen produced by the reactor in order to transfer heat to fuel gas supplied to the gas turbine.

5. The electrical power generation system according to claim 1, wherein:
a fuel gas of the gas turbine is a gas mixture of hydrocarbon gas and hydrogen; and
the exhaust gas heat exchanger is configured to transfer the heat of the exhaust gas discharged from the heater to the hydrocarbon gas included in the gas mixture in order to transfer heat to the fuel gas supplied to the gas turbine.

6. The electrical power generation system according to claim 5, wherein:
the fuel gas of the gas turbine includes a gas mixture of the hydrocarbon gas and the hydrogen that are produced by thermally decomposing the hydrocarbon gas with the reactor, and hydrocarbon gas that is supplied to the gas turbine by bypassing the reactor; and
the exhaust gas heat exchanger is configured to transfer the heat of the exhaust gas discharged from the heater to the hydrocarbon gas supplied to the gas turbine by bypassing the reactor in order to transfer heat to the fuel gas supplied to the gas turbine.

7. The electrical power generation system according to claim 6, wherein the hydrocarbon gas supplied to the gas turbine by bypassing the reactor is heated by heat of the gas turbine before the hydrocarbon gas supplied to the gas turbine by bypassing the reactor is supplied to the exhaust gas heat exchanger.

8. The electrical power generation system according to claim 1, wherein:
the heater is configured to heat the reactor by burning fuel; and
the fuel includes at least one of hydrocarbon gas and hydrogen.

9. The electrical power generation system according to claim 8, wherein the heater is configured to heat the reactor with the fuel and with exhaust heat of the gas turbine.

10. The electrical power generation system according to claim 1, wherein the hydrocarbon gas is methane.
